(19) **Europäisches Patentamt**
**European Patent Office**
**Office européen des brevets**

(11) **EP 2 367 702 B1**

(12) **FASCICULE DE BREVET EUROPEEN**

(45) Date de publication et mention
de la délivrance du brevet:
**03.10.2012 Bulletin 2012/40**

(51) Int Cl.:
***B60K 17/34*** *(2006.01)*

(21) Numéro de dépôt: **09768208.2**

(22) Date de dépôt: **17.11.2009**

(86) Numéro de dépôt international:
**PCT/FR2009/052202**

(87) Numéro de publication internationale:
**WO 2010/070220 (24.06.2010 Gazette 2010/25)**

(54) **PROCEDE DE PILOTAGE D'UN GROUPE D'ORGANES DE VEHICULE EN FONCTION DES SITUATIONS DE CONDUITE ET DISPOSITIF CORRESPONDANT**

VERFAHREN ZUR STEUERUNG EINER GRUPPE AN FAHRZEUGELEMENTEN JE NACH FAHRSITUATION UND ENTSPRECHENDE VORRICHTUNG

METHOD FOR DRIVING A GROUP OF VEHICLE MEMBERS ON THE BASIS OF DRIVING SITUATIONS, AND CORRESPONDING DEVICE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **18.12.2008 FR 0858792**

(43) Date de publication de la demande:
**28.09.2011 Bulletin 2011/39**

(73) Titulaire: **Renault S.A.S.**
**92100 Boulogne-Billancourt (FR)**

(72) Inventeurs:
• **DE-RINALDIS, Alessandro**
**F-75018 Paris (FR)**

• **POTHIN, Richard**
**F-78760 Jouars-Ponchartrain (FR)**
• **SAINT-LOUP, Philippe**
**F-78760 Jouars-Pontchartrain (FR)**
• **ROMANI, Nicolas**
**F-75016 Paris (FR)**
• **MONTI, Alessandro**
**F-92250 La Garenne-Colombes (FR)**

(56) Documents cités:
EP-A- 1 275 549    DE-A1- 10 239 255
DE-A1-102007 028 277    US-A- 6 115 663

EP 2 367 702 B1

**Description**

La présente invention se situe dans le domaine du pilotage des transmissions de véhicules à quatre roues motrices.

Les systèmes de transmission équipant des véhicules à quatre roues motrices comprennent un train avant et un train arrière. Chacun des trains avant et arrière comporte un essieu rotatif sur chaque extrémité duquel sont montées des roues motrices du véhicule. Un des problèmes importants à résoudre pour ce type de véhicules est comment répartir correctement le couple moteur sur les trains avant et arrière du véhicule en mouvement. Parmi les systèmes de transmission à quatre roues motrices connus, le visco-coupleur permet d'assurer un transfert de couple de l'essieu le plus rapide en rotation vers l'essieu le moins rapide en rotation, le transfert du couple étant une fonction de la différence de vitesse de rotation des essieux avant et arrière du véhicule. Un autre système connu consiste à utiliser des embrayages pilotés dont le fonctionnement est soit basé sur le principe de tout ou rien, soit déterminé par divers critères prenant en compte par exemple différentiel de vitesse de rotation entre les essieux avant et arrière.

Des systèmes adaptatifs existent pour optimiser la répartition de couple entre les essieux avant et arrière en fonction des situations de conduite, par exemple pour optimiser le décollage du véhicule et le franchissement d'obstacles. Par décollage d'un véhicule, on entend la phase comprise entre un premier et un deuxième état du véhicule. Dans le premier état, le véhicule est à l'arrêt, sans transmission de couple à la roue. Dans le deuxième état, le véhicule est en mouvement avec la transmission dans un état stable, ouverte ou fermée.

Le brevet US 6 115 663 (Yasuda) décrit un véhicule à quatre roues motrices dont les deux roues motrices principales sont les roues arrière (roues motrices principales). Lorsque les roues arrière se mettent à patiner, le système de contrôle de traction réduit la puissance motrice appliquée à ces roues arrière et ensuite augmente la puissance motrice sur les roues avant (roues motrices secondaires) grâce à un système de contrôle de répartition de couple. Ce document ne précise pas comment sont calculés les signaux qui commandent les couples de transfert entre train arrière et train avant. Il mentionne une commande de "traction" qui applique le couple moteur aux seules roues motrices principales, et une commande de "répartition" qui distribue le couple moteur entre les deux trains de roues, mais ne précise pas les conditions d'arbitrage et de basculement entre ces commandes.

La demande de brevet EP 1275549 (Nissan Motor Co) décrit une stratégie de répartition de couple entre les trains avant et arrière en fonction de différents signaux tels que les vitesses de roues, le régime du moteur, la position de la pédale d'accélérateur. Ce document propose une méthode pour optimiser la consigne de distribution du couple moteur entre les deux trains de roues. Ce document ne décrit pas comment est appliquée la nouvelle consigne chaque fois qu'une nouvelle valeur est calculée par le système d'optimisation.

La présente invention a pour objet d'améliorer les systèmes connus par un procédé de pilotage d'un organe ou d'un groupe d'organes de véhicule, qui délivre à ces organes un signal de commande (courant ou tension), satisfaisant des algorithmes qui optimisent la répartition d'efforts entre ces organes en fonction des situations de conduite.

Différentes situations de conduites sont gérées par des formules de calcul, aussi appelés stratégies de commandes, différentes.

L'invention a pour objet de permettre au signal de varier suivant une fonction continue, y compris au moment où les algorithmes d'optimisation imposent un basculement d'une stratégie de commande à une autre stratégie de commande. Des discontinuités du signal lors d'un basculement de stratégie, lorsque ce signal est un courant ou une tension électrique, peuvent en effet être génératrices de pics de courant ou de tension dommageables pour les organes commandés.

Une des applications de l'invention est le pilotage de la répartition du couple issu du moteur d'un véhicule à quatre roues motrices, entre le train de roues moteur principal et le train de roues secondaire du véhicule. D'autres applications sont envisageables, comme la répartition des couples de torsions entre deux moitiés de barres anti-roulis, ou la répartition des efforts entre quatre suspensions actives disposées au niveau des quatre roues du véhicule.

Selon un mode de mise en oeuvre d'un procédé de pilotage en fonction des situations de conduite, par au moins un signal effectif de commande, d'un organe ou d'un groupe d'organes d'un véhicule automobile, on effectue un arbitrage entre différentes stratégies de commandes correspondant chacune à un contexte de conduite, chaque stratégie de commande étant repérée par un identifiant. Dans ce procédé :

- on calcule en continu un signal optimal de commande, correspondant à chacune des stratégies;
- on émet en continu une valeur représentant l'identifiant de la stratégie sélectionnée;
- on détecte si un changement d'identifiant de stratégie a eu lieu; lorsqu'un changement est détecté, on génère une fonction du temps x(t) qui est croissante de zéro à 1 sur un intervalle de temps fini débutant au moment où ledit changement de stratégie a été détecté;
- lorsqu'un changement d'identifiant de stratégie a été détecté, on émet pendant au moins un intervalle de temps après ce changement d'identifiant, un signal effectif de commande qui est la somme du signal optimal de la stratégie de commande postérieure au dernier changement d'identifiant, pondérée par la valeur x(t), et du signal optimal de la stratégie de commande précédent le dernier changement d'identifiant, pondérée par la valeur (1-x(t)).

Avantageusement, lorsqu'un changement d'identifiant est détecté, on stocke en mémoire l'identifiant de la stratégie précédant le changement.

Dans une variante de mise en oeuvre, on calcule en outre la valeur absolue de la différence entre le signal effectif de commande et le signal optimal de commande de la stratégie actuellement sélectionnée, et on calcule un indicateur booléen de commutation, qui est positif si cette valeur absolue de différence est inférieure à un seuil d'écart, qui est négatif dans le cas contraire, et qui devient également négatif au moment où un changement d'identifiant est détecté.

Avantageusement, dans cette variante de mise en oeuvre, lorsque l'indicateur booléen de commutation calculé est positif, on émet un signal effectif de commande égal au signal optimal de la stratégie de commande postérieure au changement.

Selon un mode de mise en oeuvre préféré de la même variante du procédé, on interdit la sélection d'une nouvelle stratégie de commande tant que l'indicateur booléen de commutation est négatif.

Selon un mode de mise en oeuvre du procédé qui peut se combiner aux précédents, l'identifiant de la stratégie sélectionnée est calculé à partir de données de fonctionnement du véhicule, notamment des vitesses de rotation des roues, de l'angle d'ouverture du papillon de gaz d'admission et du point de fonctionnement du moteur.

Avantageusement, le signal effectif de commande pilote une répartition d'effort moteur ou résistant entre au moins un organe du train avant et au moins un organe du train arrière du véhicule, ou pilote une répartition d'effort moteur ou résistant entre au moins un organe droit et au moins un organe gauche associés au même train de roues du véhicule.

Dans une application préférée du procédé, le signal effectif de commande détermine la proportion de couple du moteur qui est transmise à chaque train de roues d'un véhicule à quatre roues motrices.

Dans une autre application préférée du procédé, on calcule suivant l'une des revendications précédentes au moins deux signaux effectifs de commande, pilotant chacun un organe ou un groupe d'organes du véhicule suivant des stratégies de commande communes à ces organes.

Selon un autre aspect, un dispositif de pilotage d'un organe ou d'un groupe d'organes d'un véhicule automobile, comprend un superviseur apte à arbitrer entre différentes stratégies de commandes en fonction des situations de conduite et apte à émettre un identifiant de la stratégie de commande sélectionnée. Le dispositif comprend en outre :

- un générateur apte à calculer en continu un signal optimal de commande correspondant à chacune des stratégies de commande;
- un bloc de détection apte à détecter si un changement d'identifiant de stratégie a eu lieu;
- un bloc de mémorisation apte à stocker en mémoire la valeur de l'identifiant de stratégie précédant le dernier changement d'identifiant;
- un générateur de fonction de commutation apte à délivrer une fonction du temps x(t) qui est croissante de zéro à 1 sur un intervalle de temps fini;
- un bloc de mixage apte à délivrer un signal effectif de commande qui est la somme du signal optimal de la stratégie de commande postérieure au dernier changement d'identifiant, pondérée par la valeur x(t), et du signal optimal de la stratégie de commande précédent le dernier changement d'identifiant, pondérée par la valeur (1-x(t)).
- un bloc de contrôle, apte à calculer la valeur absolue de la différence entre le signal effectif de commande et le signal optimal de commande de la stratégie actuellement sélectionnée, et apte à délivrer un indicateur booléen de commutation qui est positif si cette valeur absolue de différence est inférieure à un seuil d'écart, qui est négatif dans le cas contraire, et qui devient également négatif au moment où un changement d'identifiant est détecté.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'un dispositif de pilotage selon l'invention,
- les figures 2, 3, 4, 5 montrent des exemples de réalisation de quelques blocs fonctionnels de la figure 1.

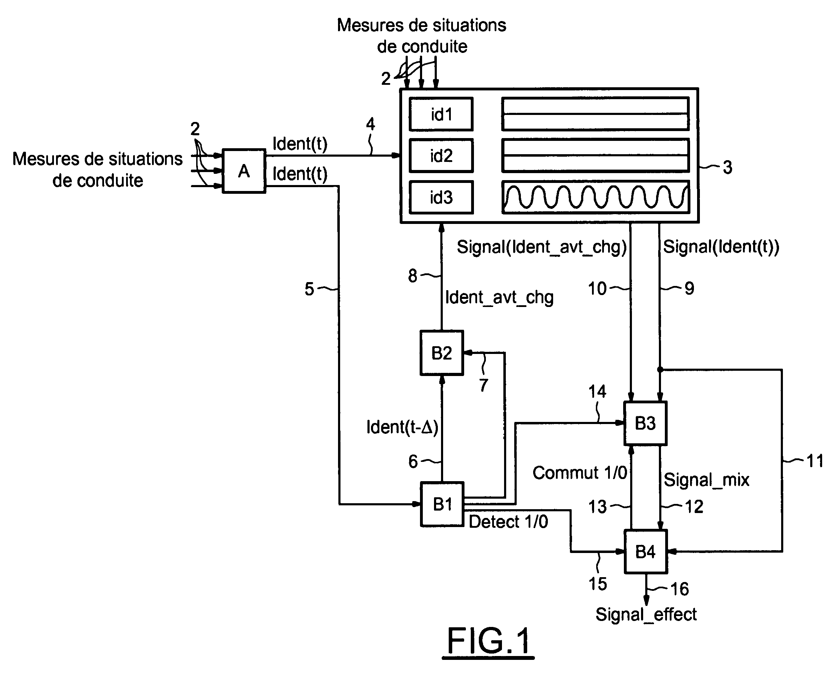

Tel que représenté sur la figure 1, un dispositif 1 de pilotage d'un groupe d'organes d'un véhicule automobile, reçoit par des connexions 2 des mesures permettant de reconstruire la situation de conduite du véhicule, par exemple les vitesses de rotation des roues, l'angle d'ouverture du papillon de gaz d'admission, le point de fonctionnement du moteur (représenté par exemple par le couple du moteur et la vitesse de rotation du moteur). Ces paramètres de fonctionnement sont envoyés vers un bloc superviseur A et vers un bloc générateur 3. Le superviseur A transmet en continu un identifiant de stratégie "ident(t)" fonction du temps t, par une connexion 4 au générateur 3, et transmet ce même identifiant de stratégie par une connexion 5 à un bloc de détection B1. Le bloc de détection B1 transmet par une connexion 7 à un bloc de mémorisation B2 une variable booléenne de détection "detect". Le bloc de détection B1 transmet par une connexion 6 au bloc de mémorisation B2 une valeur "ident(t-Δ)", qui est la valeur de l'identifiant de stratégie précédent entachée d'un retard temporel Δ. Le bloc de mémorisation B2 transmet par une connexion 8 au générateur 3, une valeur d'identifiant de stratégie "ident_avt_chg". Le générateur 3 transmet par une connexion 9 à un bloc de mixage B3, la valeur d'un premier signal "signal(ident(t))". Le générateur 3 transmet par une connexion 10 au bloc de mixage B3, la valeur d'un second signal "signal(ident_avt_chg)". Le générateur 3 transmet également la valeur du premier signal "signal(ident(t))" par une connexion 11 à un bloc de contrôle B4. Le bloc de mixage B3 transmet par une connexion 12 au bloc de contrôle B4 la valeur d'un troisième signal "signal_mix". Le bloc de contrôle B4 transmet au bloc de mixage B3, par une connexion 13, un indicateur booléen de commutation "commut(t)". Le bloc de détection B1 transmet la variable booléenne de détection "detect" par une connexion 14 au bloc de mixage B3, et par une connexion 15, au bloc de contrôle B4. Le bloc de contrôle B4 délivre une valeur "signal_effect" de signal effectif de commande, par une connexion 16 qui amène ce signal vers l'organe à commander (non représenté), qui peut être par exemple une commande électrique de répartition de couple entre le train avant et le train arrière d'un véhicule à quatre roues motrices, parfois désignée par ETC (Electrical Torque Control).

Le superviseur A reçoit des mesures permettant de reconstruire la situation de conduite du véhicule, en provenance de différents capteurs et calculateurs locaux, par exemple par un réseau multiplexé de type bus CAN ou tout autre moyen de communication entres calculateurs, représenté par les connexions 2. En fonction de ces paramètres de fonctionnement, par exemple en fonction des vitesses de rotation de chaque train de roues, du régime du moteur, de la position de la pédale d'accélérateur, le superviseur sélectionne une stratégie de commande parmi un nombre discret de stratégies préprogrammées dans le générateur 3, par exemple parmi une stratégie à deux roues motrices, une stratégie à quatre roues motrice destinée au décollage, une stratégie à quatre roues motrices destinée au franchissement. Chacune de ces stratégies est repérée par un identifiant de stratégie id1, id2, id3...qui peut être par exemple un nombre entier. A tout instant t, valeur d'un de ces identifiants de stratégie est transmise au bloc générateur 3. Les valeurs ainsi transmises par la connexion 4 constituent la fonction ident(t).

Le bloc générateur 3 dispose d'un nombre prédéfini d'algorithmes de calcul, dédiés au même organe ou groupe d'organes du véhicule (par exemple un répartiteur de couple moteur entre les roues avant et les roues arrière d'un véhicule). Chaque algorithme est associé à une stratégie différente de commande du véhicule (par exemple à une stratégie de roulage autoroutier, à une stratégie de décollage, à une stratégie de franchissement, à une stratégie de roulage ascendant, à une stratégie de roulage ascendant abrupt...). Chaque algorithme de commande permet de calculer en continu une valeur d'un signal optimal de commande de l'organe concerné. Ce signal optimal de commande permet de piloter ledit organe de manière optimisée par rapport à la situation de conduite détectée par le bloc d'arbitrage A. Le calcul de ce signal optimal de commande peut prendre en compte des paramètres de fonctionnement du véhicule lui parvenant par les connexions 2. Ces paramètres de commandes peuvent être différents des paramètres pris en compte par le bloc d'arbitrage A, mais peuvent éventuellement comprendre certains des paramètres simultanément pris en compte par le bloc d'arbitrage. Qu'une stratégie de commande soit ou non sélectionnée, le bloc générateur 3 calcule le signal de commande correspondant à cette stratégie. Cependant, deux seulement des signaux calculés sont transmis par le bloc générateur 3 au bloc de mixage B3, par les connexions 9 et 10, en fonction des identifiants de stratégie reçus par le bloc générateur 3 au travers des connexions 4 et 8.

Ainsi, le bloc générateur 3 reçoit par la connexion 4 la valeur ident(t) qui est l'identifiant de la stratégie de commande actuellement sélectionnée. En réponse, le bloc générateur 3 délivre par la connexion 9 le signal optimal de commande correspondant à cette stratégie actuellement sélectionnée. Le bloc générateur 3 reçoit par la connexion 8 la valeur ident_avt_chg qui est l'identifiant de la stratégie de commande qui était sélectionnée avant la stratégie actuelle. En réponse, le bloc générateur 3 délivre par la connexion 10 le signal optimal de commande correspondant à cette stratégie précédemment sélectionnée.

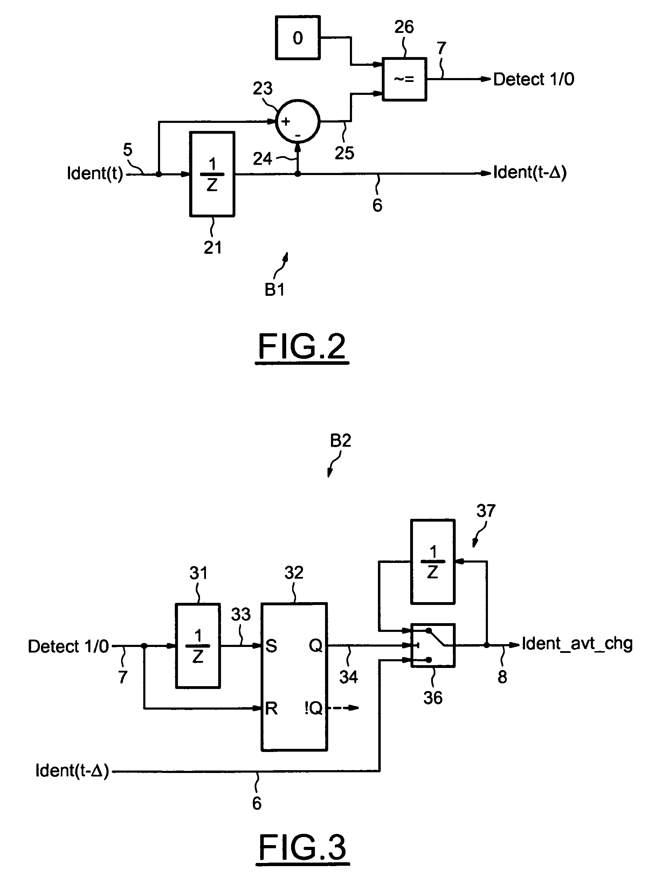

La figure 2 montre un exemple de réalisation du bloc de détection B1 de la figure 1. On retrouve quelques éléments communs à la figure 1, portant les mêmes références. L'identifiant de stratégie "ident(t)" arrivant par la connexion 5 est envoyé par une première branche de cette connexion 5 sur un duplicateur à retard 21, qui envoie à chaque instant t sur la connexion 6, la valeur retardée "ident(t-Δ)" de l'identifiant de stratégie qu'il a reçue par la connexion 5 à l'instant t-Δ. Le duplicateur à retard 21 envoie cette même valeur retardée par une connexion 24 sur une première entrée d'un soustracteur 23. L'identifiant de stratégie "ident(t)" est envoyé simultanément par une deuxième branche de la connexion 5 sur une seconde entrée du soustracteur 23. Le soustracteur 23 envoie par une connexion 25 sur un comparateur 26, la valeur |ident(t)-ident(t-Δ)| correspondant à la valeur absolue de la différence entre la valeur de l'identifiant de stratégie à l'instant t et sa valeur à l'instant (t-Δ). Le comparateur 26 effectue un test pour savoir si la valeur reçue par la connexion 25 est supérieure à un seuil de détection ε proche de zéro. Le comparateur 26 délivre par la connexion 7 la variable booléenne de détection "detect" qui vaut 1 si la valeur reçue par la connexion 25 est supérieure au seuil de détection ε, et qui vaut zéro si cette condition n'est pas vérifiée.

La figure 3 montre un exemple de réalisation du bloc de mémorisation B2 de la figure 1. On retrouve quelques éléments communs à la figure 1, portant les mêmes références. La variable booléenne de détection detect(t) arrive par une première branche de la connexion 7 sur l'entrée R d'une bascule RS 32. Cette même variable booléenne detect(t) arrive par une deuxième branche de la connexion 7 sur un duplicateur à retard 31, qui envoie une valeur retardé detect $(t-\Delta)$ de la variable de détection par une connexion 33 sur l'entrée S de la bascule 32. La bascule RS 32 envoie par une connexion 34 un signal de commande à un commutateur 36, apte à connecter ou déconnecter la connexion 6 d'une boucle de mémorisation 37. La boucle de mémorisation 37 transmet en continu la valeur qu'elle contient par la connexion 8 au générateur 3 (non représenté). Si un changement d'identifiant de stratégie est détecté à un instant $t_o$, la bascule RS reçoit sur ses entrées R et S à l'instant $t_o$, respectivement les valeurs detect($t_o$)=1 et detect($t_o$-$\Delta$)=0. La bascule RS reçoit ensuite sur ses entrées R et S à l'instant $t_o$+$\Delta$, respectivement les valeurs detect($t_o$+$\Delta$)=0 et detect($t_o$)=1. Si les entrées R et S de la bascule 32 reçoivent respectivement les valeurs 1 et zéro, par exemple à l'instant $t_o$, le commutateur 36 met en relation la connexion 6 avec la boucle de mémorisation 37. La boucle de mémorisation 37 stocke alors la valeur de l'identifiant de stratégie retardé "ident(t-$\Delta$)". Si les entrées R et S de la bascule 32 reçoivent respectivement les valeurs zéro et 1, par exemple à l'instant $t_o$+$\Delta$, le commutateur 36 déconnecte la connexion 6 d'avec la boucle de mémorisation 37. La boucle de mémorisation 37 conserve alors la valeur qu'elle avait précédemment, par exemple ident $(t_o-\Delta)$, c'est-à-dire l'identifiant de la stratégie qui était sélectionnée avant le changement de stratégie détecté à l'instant $t_o$.

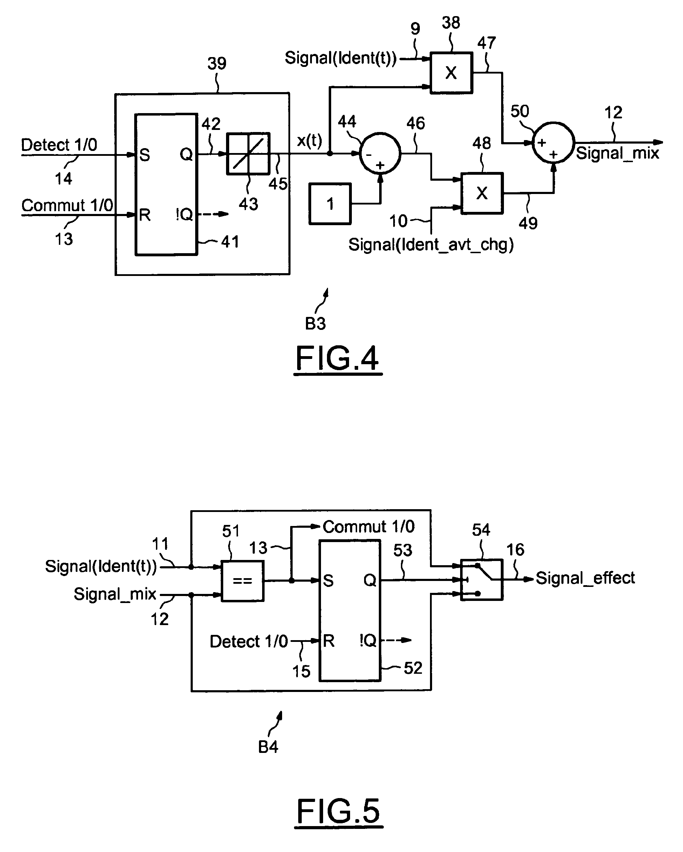

La figure 4 montre un exemple de réalisation du bloc de mixage B3 de la figure 1. On retrouve quelques éléments communs à la figure 1, portant les mêmes références. La variable booléenne de détection detect(t) arrive par la connexion 14 sur l'entrée S d'une bascule RS 41. L'indicateur booléen de commutation commut(t) arrive par la connexion 13 sur l'entrée R de la bascule RS 41. La bascule RS 41 transmet par une connexion 42 à un limiteur de pente 43 la valeur de sa sortie Q, qui vaut 1 quand ses entrées R et S valent respectivement zéro et 1, et qui vaut zéro quand ses entrées R et S valent respectivement 1 et zéro. Le limiteur de pente 43 transmet par une première branche de la connexion 45 à un multiplicateur 38 une valeur de fonction de commutation x(t) comprise entre zéro et 1. L'ensemble de la bascule RS 41, du limiteur de pente 43 et de leur connexion 42 constitue un générateur de fonction de commutation 39. Le limiteur de pente 43 transmet également par une deuxième branche de la connexion 45 à un soustracteur 44 la valeur x(t) de la fonction de commutation. Le soustracteur 44 envoie par une connexion 46 sur un multiplicateur 48 le complément à un de cette fonction de commutation, soit la valeur (1-x(t)). Le multiplicateur 48 reçoit par la connexion 10 la valeur signal(ident_avt_chg), qui est le signal optimal de la stratégie de commande qui était sélectionnée avant le dernier changement d'identifiant. Le multiplicateur 38 reçoit par la connexion 9 la valeur signal(ident(t)), qui est le signal optimal de la stratégie de commande actuellement sélectionnée. Le multiplicateur 38 envoie par la connexion 47 sur un additionneur 50, le produit des deux valeurs qu'il reçoit en entrée par les connexions 9 et 45. Le multiplicateur 48 envoie par la connexion 49 sur l'additionneur 50, le produit des deux valeurs qu'il reçoit en entrée par les connexions 10 et 46. L'additionneur 50 transmet par la connexion 12 au bloc de contrôle B4 (non représenté) la somme signal_mix des valeurs reçues en entrée sur ses connexions 47 et 49.

Le signal mixé signal_mix vaut donc :

$$signal\_mix(t)=x(t)*signal(ident(t))+(1-x(t))*signal(ident\_avt\_chg)$$
$$(\text{équation 1})$$

Lorsqu'un changement d'identifiant de stratégie est détecté, la valeur de la variable booléenne de détection passe de zéro à 1 pendant un bref intervalle de temps $\Delta t$. La bascule RS 41 transforme la fonction créneau ainsi engendrée en fonction échelon, c'est-à-dire une fonction qui passe d'une valeur constante nulle à une valeur constante égale à 1 sur un intervalle de temps de transition très bref. Le limiteur de pente 43 transforme cette fonction échelon en une fonction de commutation x(t), qui croît de la même valeur nulle à la valeur 1, de manière continue, sur un intervalle de temps plus long que l'intervalle de transition précédent. Cette fonction peut par exemple être une fonction affine par morceaux. La fonction de commutation x(t) est ensuite utilisée pour calculer le signal mixé signal_mix en effectuant la moyenne, pondérée par x(t) et (1-x(t)), des signaux optimaux de commande délivrés par les connexions 9 et 10, suivant l'équation 1.

La figure 5 montre un exemple de réalisation du bloc de contrôle B4 de la figure 1. On retrouve quelques éléments communs à la figure 1, portant les mêmes références. Une première branche de la connexion 11 amène la valeur signal(ident(t)), qui est le signal optimal de la stratégie de commande actuellement sélectionnée, sur une première entrée d'un comparateur 51. Une première branche de la connexion 12 amène la valeur du signal mixé signal_mix(t) sur une deuxième entrée du comparateur 51. Une deuxième branche de la connexion 11 amène la valeur signal(ident(t)), qui est le signal optimal de la stratégie de commande actuellement sélectionnée, sur une première entrée d'un commutateur 54. Une deuxième branche de la connexion 12 amène la valeur du signal mixé signal_mix(t), sur une deuxième entrée du commutateur 54. Le comparateur 51 délivre par une première branche de la connexion 13 au bloc de mixage B3 (non représenté), la valeur de l'indicateur booléen de commutation commut(t). Le comparateur 51 transmet par une deuxième branche de la connexion 13, ce même indicateur booléen de commutation à l'entrée S d'une bascule RS 52. La connexion 15 amène la valeur de la variable booléenne de détection detect(t) sur l'entrée R de la bascule RS 52. La sortie Q de la bascule RS 52 est reliée par une connexion 53 à une entrée de commande du commutateur 54. La sortie du commutateur 54 délivre par la connexion 16 la valeur du signal effectif de commande signal_effect(t).

Le comparateur 51 calcule la valeur absolue de la différence entre les deux valeurs lui arrivant par les connexions 11 et 12, et compare cette valeur absolue à un seuil d'écart ε' proche de zéro. Si la valeur absolue de la différence est inférieure au seuil d'écart ε', le comparateur attribue la valeur 1 à l'indicateur booléen de commutation commut(t). Si la valeur absolue de la différence est supérieure au seuil d'écart ε', le comparateur attribue la valeur 0 à l'indicateur booléen de commutation commut(t). Lorsqu'un nouvel identifiant de stratégie est détecté, la valeur detect(t) envoyée sur l'entrée R de la bascule 52 passe de zéro à 1 pendant un bref intervalle de temps Δt. Le signal de sortie de la bascule RS 52 devient alors égal à 0, et, transmis par la connexion 53, commande au commutateur 54 de mettre en relation les connexions 12 et 16. Le signal effectif de commande signal_effect est alors identique au signal mixé signal_mix calculé par le bloc de mixage B3, et lui reste identique tant que la valeur arrivant sur l'entrée S de la bascule ne prend pas à son tour la valeur 1. Quand la différence entre le signal mixé calculé par le bloc B3, et le signal optimal de la stratégie de commande actuellement sélectionnée signal(ident(t)) devient inférieure au seuil d'écart ε', l'indicateur booléen de commutation commut(t), devient égal à 1. Le signal de sortie de la bascule RS 52 devient alors égal à 1 et, transmis par la connexion 52, commande au commutateur 54 de mettre en relation les connexions 11 et 16. Le signal effectif de commande signal_effect devient alors identique au signal optimal de la stratégie de commande actuellement sélectionnée signal(ident(t)). Le signal mixé émis par le bloc B3 n'étant plus utilisé pour imposer la valeur du signal effectif de commande, les valeurs d'entrée du bloc B3 peuvent alors être réinitialisées en vue d'un nouveau calcul de signal mixé de basculement entre deux stratégies. Cette réinitialisation du bloc B3 est effectuée par l'arrivée d'une valeur commut(t) égale à 1 par la connexion 13 sur l'entrée R de la bascule 41. La sortie Q de la bascule 41 prend alors la valeur zéro, et impose par l'intermédiaire du limiteur de pente 43 cette même valeur nulle à la fonction de commutation x(t).

On peut noter dans l'exemple de réalisation décrit plus haut, que le signal mixé, utilisé comme signal effectif de commande lors du basculement entre deux stratégies, est calculé à partir de deux signaux issus directement du générateur 3. Dans cette configuration il est avantageux d'interdire un nouveau changement d'identifiant de stratégie tant que l'indicateur de commutation n'est pas redevenu égal à 1. On évite ainsi que les deux signaux reçus par le bloc B3 sur ses connexions 9 et 10 ne soient soudainement remplacés par deux autres signaux associés à deux nouveaux identifiants de stratégie. On peut cependant envisager des variantes de l'invention où un nouveau basculement de stratégie est possible avant que l'indicateur de commutation soit redevenu égal à 1, par exemple en disposant plusieurs blocs B3 connectés en cascade. Le signal mixé sign_mix correspondant au premier basculement d'identifiant peut être alors transmis sur l'équivalent de la connexion 10 d'un bloc B3 chargé de calculer le signal mixé correspondant au changement d'identifiant suivant.

Il est à noter que le retard temporel Δ induit dans les signaux ident(t) et detect(t) par les duplicateurs à retard 21 et 31, est un intervalle de temps suffisamment long pour qu'une variation de signal de cette durée soit détectable par les moyens de calcul et/ou de traitement du signal constituant l'invention. Le retard temporel Δ reste cependant très court, afin de ne pas pénaliser le temps de basculement effectif du signal de commande d'une stratégie à une autre. En pratique, ce retard temporel correspond généralement à une période d'échantillonnage du calculateur.

Il est également à noter que le raisonnement décrit plus haut sur le choix des valeurs 1 ou zéro attribuées à l'indicateur booléen de commutation (commut) et à la variable de détection (detect), doit être compris au sens fonctionnel. Les valeurs positives et négatives des variables pourraient êtres désignées par d'autres couples de valeurs que 1/0 par exemple positif/négatif, Oui/Non, Vrai/Faux, Basculé/Stable, Achevé/Encours sans changer la nature de l'invention. Les valeurs booléennes pourraient, tout en restant dans le cadre de l'invention, avoir des définitions opposées à celles de la description, il suffirait que les propositions logiques citées soient reformulées en conséquence.

Il faut comprendre que les signaux reçus ou émis par les différents blocs fonctionnels constituant l'invention peuvent être toutes formes de signaux aptes à véhiculer une valeur numérique ou une valeur logique, par exemple des courants, des tensions, des signaux lumineux par fibres optiques.

Enfin, la réalisation de l'invention sous forme de blocs logiques ou sous forme de blocs de calculs, peut se faire à partir de composants électroniques ou de calculateurs physiquement indépendants agencés comme décrit plus haut. L'invention peut également être réalisée en programmant tous les blocs logiques et les blocs de calculs décrits sous forme logicielle. Le programme correspondant, ainsi que ses sous programmes, peuvent être implantés dans un ou plusieurs calculateurs, intégrés ou non à une unité de commande électronique centrale.

L'invention permet de piloter un organe de véhicule de manière adaptative, par un signal de commande, en fonction de plusieurs stratégies de commandes appropriées chacune à un contexte de conduite. L'invention permet de changer de stratégie de commande du véhicule sans engendrer de discontinuités du signal de commande. Le signal de transition entre deux stratégies de commande, produit suivant l'invention, reste un signal adaptatif aux efforts extérieurs subis par le véhicule, puisqu'il est construit comme une moyenne entre deux signaux adaptatifs. Quand un basculement de stratégie est décidé, ce basculement peut être opéré rapidement, par une simple moyenne sur des signaux optimaux dont le calcul est déjà effectué. En outre, l'invention permet de contrôler l'achèvement de l'opération de basculement, ce qui donne la possibilité, soit d'éviter le recouvrement de plusieurs phases de basculement, soit de gérer ces basculements superposés. La fiabilité du signal de commande est améliorée, le confort et la sécurité de conduite également.

**Revendications**

1. Procédé de pilotage en fonction des situations de conduite, par au moins un signal effectif de commande (Signal_effect), d'un organe ou d'un groupe d'organes d'un véhicule automobile, dans lequel on effectue un arbitrage entre différentes stratégies de commandes correspondant chacune à un contexte de conduite, chaque stratégie de commande étant repérée par un identifiant (id1, id2, id3), **caractérisé en ce que** :

   - on calcule en continu un signal optimal de commande, correspondant à chacune des stratégies;
   - on émet en continu une valeur représentant l'identifiant (Ident(t)) de la stratégie sélectionnée;
   - on détecte si un changement d'identifiant de stratégie a eu lieu; lorsqu'un changement est détecté, on génère une fonction du temps x(t) qui est croissante de zéro à 1 sur un intervalle de temps fini débutant au moment où ledit changement de stratégie a été détecté;
   - lorsqu'un changement d'identifiant de stratégie a été détecté, on émet pendant au moins un intervalle de temps après ce changement d'identifiant, un signal effectif de commande (Signal_effect) qui est la somme (Signal_mix) du signal optimal de la stratégie de commande postérieure au dernier changement d'identifiant (Signal(Ident(t))), pondérée par la valeur x(t), et du signal optimal de la stratégie de commande précédent le dernier changement d'identifiant (Signal(Ident_avt_chg)), pondérée par la valeur (1-x(t)).

2. Procédé de pilotage selon la revendication précédente, dans lequel, lorsqu'un changement d'identifiant est détecté, on stocke en mémoire l'identifiant de la stratégie précédant le changement.

3. Procédé de pilotage selon l'une des revendications précédentes, dans lequel on calcule en outre la valeur absolue de la différence entre le signal effectif de commande et le signal optimal de commande de la stratégie actuellement sélectionnée, et on calcule un indicateur booléen de commutation (commut), qui est positif si cette valeur absolue de différence est inférieure à un seuil d'écart, qui est négatif dans le cas contraire, et qui devient également négatif au moment où un changement d'identifiant est détecté.

4. Procédé de pilotage selon la revendication 3, dans lequel, lorsque l'indicateur booléen de commutation calculé est positif, on émet un signal effectif de commande (Signal_effect) égal au signal optimal de la stratégie de commande postérieure au changement (Signal(Ident(t))).

5. Procédé de pilotage suivant les revendications 3 ou 4, dans lequel on interdit la sélection d'une nouvelle stratégie de commande tant que l'indicateur booléen de commutation est négatif.

6. Procédé de pilotage suivant l'une des revendications précédentes, dans lequel l'identifiant de la stratégie sélectionnée est calculé à partir de données de fonctionnement du véhicule, notamment des vitesses de rotation des roues, de l'angle d'ouverture du papillon de gaz d'admission et du point de fonctionnement du moteur.

7. Procédé de pilotage suivant l'une des revendications précédentes, dans lequel le signal effectif de commande pilote une répartition d'effort moteur ou résistant entre au moins un organe du train avant et au moins un organe du train arrière du véhicule, ou pilote une répartition d'effort moteur ou résistant entre au moins un organe droit et au moins un organe gauche associés au même train de roues du véhicule.

8. Procédé de pilotage suivant l'une des revendications précédentes, dans lequel le signal effectif de commande détermine la proportion de couple du moteur qui est transmise à chaque train de roues d'un véhicule à quatre roues motrices.

9. Procédé de pilotage dans lequel on calcule suivant l'une des revendications précédentes au moins deux signaux effectifs de commande, pilotant chacun un organe ou un groupe d'organes du véhicule suivant des stratégies de commande communes à ces organes.

10. Dispositif de pilotage d'un organe ou d'un groupe d'organes d'un véhicule automobile, comprenant un superviseur (A) apte à arbitrer entre différentes stratégies de commandes en fonction des situations de conduite et apte à émettre un identifiant de la stratégie de commande sélectionnée, **caractérisé en ce que** le dispositif comprend en outre :-

un générateur (3) apte à calculer en continu un signal optimal de commande correspondant à chacune des stratégies de commande;

- un bloc de détection (B1) apte à détecter si un changement d'identifiant de stratégie a eu lieu;
- un bloc de mémorisation (B2) apte à stocker en mémoire la valeur de l'identifiant de stratégie précédant le dernier changement d'identifiant;
- un générateur de fonction de commutation (39) apte à délivrer une fonction du temps x(t) qui est croissante de zéro à 1 sur un intervalle de temps fini;
- un bloc de mixage (B3) apte à délivrer un signal effectif de commande qui est la somme du signal optimal de la stratégie de commande postérieure au dernier changement d'identifiant, pondérée par la valeur x(t), et du signal optimal de la stratégie de commande précédent le dernier changement d'identifiant, pondérée par la valeur (1-x(t)).
- un bloc de contrôle (B4), apte à calculer la valeur absolue de la différence entre le signal effectif de commande et le signal optimal de commande de la stratégie actuellement sélectionnée, et apte à délivrer un indicateur booléen de commutation qui est positif si cette valeur absolue de différence est inférieure à un seuil d'écart, qui est négatif dans le cas contraire, et qui devient également négatif au moment où un changement d'identifiant est détecté.

## Claims

1. Method for driving on the basis of driving situations, by at least one effective control signal (Signal_effect), a member or a group of members of an automotive vehicle, in which an arbitration is made between different control strategies each corresponding to a driving context, each control strategy being identified by an identifier (id1, id2, id3), **characterized in that**:

   - an optimum control signal, corresponding to each of the strategies, is continuously computed;
   - a value representing the identifier (Ident(t)) of the selected strategy is continuously transmitted;
   - if a change of strategy identifier has occurred, it is detected; when a change is detected, a time function x(t) increasing from zero to 1 over a finite time interval beginning at the moment when said change of strategy was detected is generated;
   - when a change of strategy identifier has been detected, an effective control signal (Signal_effect) is transmitted for at least one time interval after this change of identifier, said signal being the sum (Signal_mix) of the optimum signal of the control strategy after the last change of identifier (Signal(Ident(t))), weighted by the value x(t), and of the optimum signal of the control strategy preceding the last change of identifier (Signal(Ident_avt_chg)), weighted by the value (1-x(t)).

2. Driving method according to the preceding claim, in which, when a change of identifier is detected, the identifier of the strategy preceding the change is stored in memory.

3. Driving method according to one of the preceding claims, in which the absolute value of the difference between the effective control signal and the optimum control signal of the strategy currently selected is also computed, and a Boolean switchover indicator (commut) is computed, which is positive if this absolute difference value is below a deviation threshold, which is negative otherwise, and which also becomes negative at the moment when a change of identifier is detected.

4. Driving method according to Claim 3, in which, when the computed Boolean switchover indicator is positive, an effective control signal (Signal_effect) is transmitted which is equal to the optimum signal of the control strategy after the change (Signal(Ident(t))).

5. Driving method according to Claim 3 or 4, in which the selection of a new control strategy is prohibited as long as the Boolean switchover indicator is negative.

6. Driving method according to one of the preceding claims, in which the identifier of the selected strategy is computed on the basis of vehicle operation data, notably the speeds of rotation of the wheels, the angle of opening of the intake gas butterfly valve and of the operating point of the engine.

7. Driving method according to one of the preceding claims, in which the effective control signal drives a distribution of motive or resistant force between at least one member of the front axle system and at least one member of the rear axle system of the vehicle, or drives a distribution of motive or resistant force between at least one right-hand member and at least one left-hand member associated with the same axle system of the vehicle.

8. Driving method according to one of the preceding claims, in which the effective control signal determines the proportion of torque of the engine which is transmitted to each axle system of a vehicle with four drive wheels.

9. Driving method in which at least two effective control signals, each driving a member or a group of members of the vehicle on the basis of control strategies common to these members, are computed according to one of the preceding claims.

10. Device for driving a member or a group of members of an automotive vehicle, comprising a supervisor (A) capable of arbitrating between different control strategies on the basis of driving situations and capable of transmitting an identifier of the selected control strategy, **characterized in that** the device also comprises:

- a generator (3) capable of continuously computing an optimum control signal corresponding to each of the control strategies;
- a detection block (B1) capable of detecting if a change of strategy identifier has occurred;
- a storage block (B2) capable of storing in memory the value of the strategy identifier preceding the last change of identifier;
- a switchover function generator (39) capable of delivering a time function x(t) increasing from zero to 1 over a finite time interval;
- a mixing block (B3) capable of delivering an effective control signal which is the sum of the optimum signal of the control strategy after the last change of identifier, weighted by the value x(t), and of the optimum signal of the control strategy preceding the last change of identifier, weighted by the value (1-x(t)) ;
- a control block (B4), capable of computing the absolute value of the difference between the effective control signal and the optimum control signal of the strategy currently selected, and capable of delivering a Boolean switchover indicator which is positive if this absolute difference value is below a deviation threshold, which is negative otherwise, and which also becomes negative at the moment when a change of identifier is detected.

**Patentansprüche**

1. Steuerverfahren abhängig von Fahrsituationen, durch mindestens ein effektives Steuersignal (Signal_effect), eines Organs oder einer Gruppe von Organen eines Kraftfahrzeugs, bei dem eine Arbitration zwischen verschiedenen Steuerstrategien durchgeführt wird, die je einem Fahrkontext entsprechen, wobei jede Steuerstrategie durch eine Kennung (id1, id2, id3) markiert ist, **dadurch gekennzeichnet, dass**:

- kontinuierlich ein optimales Steuersignal berechnet wird, das jeder dieser Strategien entspricht;
- kontinuierlich ein die Kennung (Ident(t)) der ausgewählten Strategie darstellender Wert emittiert wird;
- erfasst wird, ob eine Strategiekennungsänderung stattgefunden hat; wenn eine Änderung erfasst wird, eine Funktion der Zeit x(t) erzeugt wird, die über einen endlichen Zeitraum von Null auf 1 ansteigt, beginnend in dem Moment, in dem die Strategieänderung erfasst wurde;
- wenn eine Strategiekennungsänderung erfasst wurde, während mindestens eines Zeitraums nach dieser Kennungsänderung ein effektives Steuersignal (Signal_effect) emittiert wird, das die Summe (Signal_mix) des optimalen Signals der Steuerstrategie nach der letzten Kennungsänderung (Signal(ident(t))), gewichtet mit dem Wert x(t), und des optimalen Signals der Steuerstrategie vor der letzten Kennungsänderung (Signal(Ident_avt_ chg)), gewichtet mit dem Wert (1-x(t)) ist.

2. Steuerverfahren nach dem vorhergehenden Anspruch, wobei, wenn eine Kennungsänderung erfasst wird, die Kennung der Strategie vor der Änderung gespeichert wird.

3. Steuerverfahren nach einem der vorhergehenden Ansprüche, wobei außerdem der Absolutwert der Differenz zwischen dem effektiven Steuersignal und dem optimalen Steuersignal der gerade ausgewählten Strategie berechnet wird, und ein boolescher Schaltungsindikator (commut) berechnet wird, der positiv ist, wenn dieser Differenz-Absolutwert unter einer Abweichungsschwelle liegt, der im gegenteiligen Fall negativ ist, und der ebenfalls in dem Moment negativ wird, in dem eine Kennungsänderung erfasst wird.

**4.** Steuerverfahren nach Anspruch 3, wobei, wenn der berechnete boolesche Schaltungsindikator positiv ist, ein effektives Steuersignal (Signal_effect) gleich dem optimalen Signal der Steuerstrategie nach der Änderung (Signal (ident(t))) emittiert wird.

**5.** Steuerverfahren nach den Ansprüchen 3 oder 4, wobei die Auswahl einer neuen Steuerstrategie so lange verhindert wird, wie der boolesche Schaltungsindikator negativ ist.

**6.** Steuerverfahren nach einem der vorhergehenden Ansprüche, wobei die Kennung der ausgewählten Strategie ausgehend von Betriebsdaten des Fahrzeugs berechnet wird, insbesondere den Drehgeschwindigkeiten der Räder, dem Öffnungswinkel des Ansauggas-Drosselventils und des Betriebspunkts des Motors.

**7.** Steuerverfahren nach einem der vorhergehenden Ansprüche, wobei das effektive Steuersignal eine Verteilung der Antriebs- oder Widerstandskraft zwischen mindestens einem Organ der Vorderachse und mindestens einem Organ der Hinterachse des Fahrzeugs steuert, oder eine Verteilung der Antriebs- oder Widerstandskraft zwischen mindestens einem rechten Organ und mindestens einem linken Organ steuert, die dem gleichen Radsatz des Fahrzeugs zugeordnet sind.

**8.** Steuerverfahren nach einem der vorhergehenden Ansprüche, wobei das effektive Steuersignal den Anteil des Antriebsmoments bestimmt, der an jeden Radsatz eines Fahrzeugs mit vier Antriebsrädern übertragen wird.

**9.** Steuerverfahren, wobei nach einem der vorhergehenden Ansprüche mindestens zwei effektive Steuersignale berechnet werden, die je ein Organ oder eine Gruppe von Organen des Fahrzeugs gemäß diesen Organen gemeinsamen Steuerstrategien steuern.

**10.** Vorrichtung zur Steuerung eines Organs oder einer Gruppe von Organen eines Kraftfahrzeugs, die ein Hauptsteuerprogramm (A) enthält, das zwischen verschiedenen Steuerstrategien abhängig von Fahrsituationen entscheiden und eine Kennung der ausgewählten Steuerstrategie emittieren kann, **dadurch gekennzeichnet, dass** die Vorrichtung außerdem enthält:

- einen Generator (3), der kontinuierlich ein optimales Steuersignal entsprechend jeder der Steuerstrategien berechnen kann;
- einen Erfassungsblock (B1), der erfassen kann, ob eine Strategiekennungsänderung stattgefunden hat;
- einen Speicherblock (B2), der den Wert der Strategiekennung vor der letzten Kennungsänderung speichern kann;
- einen Schaltfunktionsgenerator (39), der eine Funktion der Zeit x(t) liefern kann, die in einem endlichen Zeitraum von Null auf 1 ansteigt;
- einen Mischblock (B3), der ein effektives Steuersignal liefern kann, das die Summe des optimalen Signals der Steuerstrategie nach der letzten Kennungsänderung, gewichtet mit dem Wert x(t), und des optimalen Signals der Steuerstrategie vor der letzten Kennungsänderung, gewichtet mit dem Wert (1-x(t)) ist;
- einen Kontrollblock (B4), der den Absolutwert der Differenz zwischen dem effektiven Steuersignal und dem optimalen Steuersignal der gerade ausgewählten Strategie berechnen kann, und der einen booleschen Schaltungsindikator liefern kann, der positiv ist, wenn dieser Differenz-Absolutwert niedriger als eine Abweichungsschwelle ist, der im gegenteiligen Fall negativ ist, und der ebenfalls in dem Moment negativ wird, in dem eine Kennungsänderung erfasst wird.

EP 2 367 702 B1

Mesures de situations
de conduite

2

id1

id2

id3

3

Mesures de situations
de conduite

2

A

Ident(t)

Ident(t)

4

5

Signal(Ident_avt_chg)

Signal(Ident(t))

8

Ident_avt_chg

10

9

B2

7

Ident(t-Δ)

6

14

B3

11

Ident(t-Δ)

Commut 1/0

Signal_mix

B1

13

12

Detect 1/0

B4

15

16

Signal_effect

## FIG.1

## FIG.2

## FIG.3

FIG.4

FIG.5

**EP 2 367 702 B1**

## RÉFÉRENCES CITÉES DANS LA DESCRIPTION

**Documents brevets cités dans la description**

- US 6115663 A, Yasuda
- EP 1275549 A